# FASCICULE DE BREVET EUROPEEN

(11) **EP 3 281 213 B1**
(45) Date de publication et mention de la délivrance du brevet: **13.03.2019**
(21) Numéro de dépôt: 16722283.5
(22) Date de dépôt: 08.04.2016
(51) Int. Cl.: H01F 38/08, H01F 27/06, B23K 11/31

(54) **TRANSFORMATEUR POUR PINCE A SOUDER ET PINCE A SOUDER INTEGRANT UN TEL TRANSFORMATEUR**
TRANSFORMATOR FÜR SCHWEISSZUNGEN UND SCHWEISSZUNGEN MIT SOLCH EINEM TRANSFORMATOR
TRANSFORMER FOR WELDING TONGUES AND WELDING TONGUES INCORPORATING SUCH A TRANSFORMER

(30) Priorité: 09.04.2015 FR 1553081
(43) Date de publication de la demande: 14.02.2018
(73) Titulaire: FTS Welding, 37510 Ballan Mire (FR)
(72) Inventeur: SIMON, Alain, 28000 Chartres (FR); VALETTE, Loic, 94450 Limeil - Brevannes (FR)
(74) Mandataire: Ipside
(86) Numéro de dépôt international: PCT/FR2016/050815
(87) Numéro de publication internationale: WO 2016/162647

(56) Documents cités:
- EP-A1- 2 664 406
- WO-A1-93/03892
- US-A- 4 917 619
- US-A- 5 010 228

## Description

L'invention concerne un transformateur de pince à souder ainsi qu'une pince à souder intégrant un tel transformateur. L'invention est plus particulièrement relative à la manière dont est monté le transformateur sur la pince à souder.

Une pince à souder est un dispositif, généralement monté sur un robot, qui permet de souder par points des pièces, telles que des tôles, sous de très forts courants, de l'ordre de 10 000 à 25 000 A.

Une pince à souder comporte deux bras dont chaque extrémité libre est pourvue d'une électrode de soudage. Au moins l'un des bras est mobile afin d'assurer un écartement nécessaire au positionnement des deux pièces à souder. Une fois les pièces à souder agencées entre les deux électrodes, une force de serrage est appliquée aux bras pour maintenir serrées les pièces l'une contre l'autre et assurer le soudage via le passage d'un très fort courant d'une électrode à l'autre.

Le très fort courant délivré aux électrodes est issu d'un transformateur associé à la pince à souder.

On connait, dans l'art antérieur, le brevet américain n° US 4 617 619 A, qui divulgue un transformateur pour pince à souder.

Dans les pinces à souder actuelles, le transformateur est positionné physiquement en interface entre la pince et le robot, le transformateur étant disposé dans une cage de protection, la cage étant d'une part fixée au robot et d'autre part à la pince.

Cet agencement engendre un inconvénient majeur lorsqu'il s'agit d'intervenir sur le transformateur, par exemple au regard de son circuit de refroidissement ou de son circuit électrique. En effet, il est nécessaire en premier lieu de démonter la pince à souder, puis de dévisser les nombreuses vis donnant accès à l'intérieur de la cage de protection du transformateur. Ces étapes de montage, et remontage une fois l'intervention effectuée sur le transformateur, sont fastidieuses.

En outre, lorsque la pince est montée sur un robot, toute intervention sur le transformateur nécessite de démonter la pince du robot.

Par ailleurs, certains types de soudure imposent d'inverser les polarités des bras de soudure de la pince. Cela ne peut être réalisé qu'en démontant le transformateur et en changeant les contacts du transformateurs. Là encore, le temps engendré est important et les opérations sont lourdes.

L'invention a donc pour but de fournir une pince à souder dont l'association avec le transformateur ne présente pas les inconvénients précités. En particulier, l'invention conduit à un accès rapide au transformateur, procure des facilités de montage/démontage du transformateur vis-à-vis de la pince et d'un robot sur lequel serait montée la pince, et propose un système d'inversion des polarités des bras de soudage simple et rapide de mise en oeuvre.

Selon l'invention, le transformateur pour pince à souder comporte un carter, des moyens de fixation mécanique et des moyens de connexion électrique, et est caractérisé en ce qu'il comporte deux pattes écartées l'une de l'autre et en regard, faisant saillie hors du carter, et formant à la fois, les moyens de fixation mécanique du transformateur destiné à être fixé sur la pince à souder, et les moyens de connexion électrique destinés à être reliés aux électrodes de la pince à souder.

Les pattes du transformateur forment ainsi avantageusement en combinaison des moyens de fixation mécanique et des moyens de raccordement/connexion électrique pour le passage du courant du transformateur vers le corps de pince et donc vers les électrodes, ce qui permet une fixation mécanique et un raccordement électrique combiné de manière simple et extrêmement rapide.

Les pattes sont des moyens de fixation et de raccordement à engagement mécanique mutuel avec l'élément de la pince auxquelles elles sont destinées, sans utilisation de vis. Cela constitue une fixation immédiate sans besoin de moyens amovibles de fixation tels qu'une pluralité de vis comme dans l'art antérieur.

Selon une caractéristique, les pattes comportent chacune un doigt et le transformateur comporte deux pièces d'interface creuses pourvues chacune d'un orifice central, chacune des pièces étant emmanchée de manière serrée par son orifice central autour d'un doigt, le doigt ou la pièce restant libre de tourner l'un par rapport à l'autre lorsqu'une force de pivotement est exercée.

Les pattes possèdent des âmes longitudinales parallèles à l'axe du carter, les doigts étant solidaires, fixes et faisant saillie transversalement aux faces internes des âmes et étant orientés en regard tout en étant espacés.

Selon une autre caractéristique, chaque pièce d'interface est apte à modifier son volume selon au moins une dimension lorsqu'un mouvement de rotation est imposé à chaque doigt (concomitamment), en particulier lorsqu'un mouvement par rotation sera imposé au transformateur lorsque celui-ci sera en position d'utilisation monté sur la pince. Le mouvement de rotation est du type quart de tour.

Avantageusement, chaque pièce d'interface comporte deux parties mobiles en translation l'une par rapport à l'autre et délimitant l'orifice central dans lequel est logé un doigt. Les parties mobiles sont destinées à être mises en mouvement et à s'écarter l'une de l'autre, lors de la rotation du doigt.

De préférence, chaque partie d'une pièce d'interface présente une paroi interne concave en regard et délimitant l'orifice d'engagement d'un doigt, et chaque doigt présente une section sensiblement rectangulaire, la longueur séparant les petits côtés de cette section étant plus grande que la distance séparant les parois internes concaves des parties de la pièce d'interface.

Cette différence de longueur engendre lors de la rotation, des forces de poussée sur les parois internes des parties mobiles, procurant leur écartement en translation. Cette augmentation en volume de chaque pièce d'interface, les pièces d'interface faisant partie des pattes du transformateur et donc des moyens d'engagement et de raccordement, est destiné à assurer le verrouillage des pattes du transformateur en position montée dans les éléments d'accueil auxquels sont destinés les pattes.

Préférentiellement, les petits côtés selon la section du doigt sont convexes, le profil de la convexité correspondant au profil de la concavité de chaque paroi interne des parties de la pièce d'interface, de sorte que les deux profils convexe et concave sont aptes à s'épouser parfaitement pour former des surfaces continues de contact, ce qui garantit un passage du courant optimal.

Les pattes du transformateur, les doigts et les pièces d'interface sont dans un matériau conducteur de l'électricité, de préférence en cuivre.

L'invention est également relative à une pince à souder comportant un transformateur de l'invention.

Avantageusement, le transformateur est monté de manière oblique sur le corps de pince.

Le transformateur est fixé mobile en pivotement. Il est apte à être extrait du corps de pince ou engagé dans celui-ci par translation.

La pince à souder comprend un corps, notamment une embase de fixation, et le transformateur comporte des moyens d'engagement mécanique mutuel coopérant avec le corps de pince pour réaliser concomitamment la fixation mécanique du transformateur sur le corps de la pince et le raccordement électrique du transformateur à la pince.

Selon une caractéristique, la pince à souder comporte une embase de fixation comportant deux logements pour accueillir les pattes de fixation et de raccordement électrique du transformateur, la coopération des pattes avec les logements étant faite par un mouvement de translation, le verrouillage ou le déverrouillage mécanique des pattes dans les logements étant réalisé par un mouvement de rotation. Le verrouillage implique le raccordement électrique par une mise en contact de surfaces respectives des pattes, et plus particulièrement des pièces d'interface, et des logements de l'embase de fixation. Les logements de l'embase de fixation sont également en un matériau conducteur de l'électricité, de préférence en cuivre.

Chaque logement accueille une pièce d'interface associée avec un doigt en saillie des pattes du transformateur, chaque pièce présentant avec deux des parois de chaque logement un jeu latéral, le jeu étant comblé lors du verrouillage. En effet, lors de la rotation du transformateur, et donc des doigts du transformateur, chacune des pièces s'écarte comblant les jeux latéraux jusqu'à s'appuyer avec force contre les parois des logements, garantissant à la fois le verrouillage mécanique et le raccordement électrique par contact des surfaces.

Pour assurer le refroidissement du transformateur, le transformateur comporte des moyens internes de refroidissement et des moyens de connexion à raccordement rapide, du type par encliquetage, destinés à se connecter à des conduites externes. De préférence, les moyens internes de refroidissement s'étendent dans les pattes du transformateur et les moyens de connexion à raccordement rapide sont disposés aux extrémités distales des pattes.

Ainsi, la pince à souder comporte des conduites de refroidissement qui sont reliées à des moyens de refroidissement internes du transformateur par des moyens de connexion à raccordement rapide, du type par encliquetage, de préférence agencés aux extrémités distales des pattes du transformateur.

Par conséquent, le transformateur est très rapide à monter ou démonter du corps de la pince à souder, ledit corps et le transformateur comportant des moyens d'engagement mécanique mutuel pour réaliser concomitamment la fixation mécanique du transformateur sur le corps de la pince et le raccordement électrique du transformateur à la pince, sans besoin de vis de fixation, et le raccordement des moyens de refroidissement du transformateur à des conduites externes se faisant également par raccordement rapide.

Dans la suite de la description, les qualificatifs « supérieur », « inférieur », d'un élément sont utilisés dans le cadre d'une installation normale de la pince sur un robot.

Dans la suite de la description, le terme « externe » qualifie des éléments respectivement tournés en direction de l'environnement extérieur, et le terme « interne » qualifie une direction opposée.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue en perspective de côté d'une pince à souder intégrant un transformateur selon l'invention ;
- La figure 2 représente une vue en perspective d'un autre modèle de pince à souder comprenant des bras de soudage différents, mais intégrant de la même manière le transformateur de l'invention ;
- La figure 3 est une vue en perspective des pattes de fixation du transformateur sans les pièces d'interface ;
- La figure 4 est une vue en perspective de détail de la zone de fixation du transformateur sur la pince à souder de la figure 1, le transformateur étant en position déverrouillée du transformateur 3 après avoir été monté/engagé dans l'embase du corps de pince ;
- La figure 5 correspond à la vue de la figure 4 en position verrouillée pour le fonctionnement de la pince tel qu'illustré sur la figure 1 ;
- La figure 6 est une vue en perspective de détail d'une patte de fixation avec la pièce d'interface associée ;
- La figure 7 est une vue en perspective de l'embase de fixation de la pince à souder ;
- La figure 8 est une vue en perspective et en coupe de la figure 4 (position déverrouillée), la coupe étant dans le plan de la face externe de l'embase au niveau d'un logement accueillant le doigt et la pièce d'interface d'une patte du transformateur ;
- La figure 9 correspond à la figure 8 en position verrouillée du transformateur ;
- La figure 10 illustre une vue de côté et de dessus d'une pièce d'interface ;
- La figure 11 illustre une vue de côté et de dessus d'un doigt du transformateur ;
- La figure 12 est une vue de dessus d'un doigt associé à une pièce d'interface, la pièce étant maintenue dans l'embase de fixation de la pince, cette position correspondant en outre à la position déverrouillée du transformateur ;
- La figure 13 est similaire à la figure 12 en position verrouillée du transformateur, une fois que le doigt a été tourné d'un quart de tour dans la pièce 8 qui est par ailleurs maintenue en position dans l'embase de fixation de la pince.

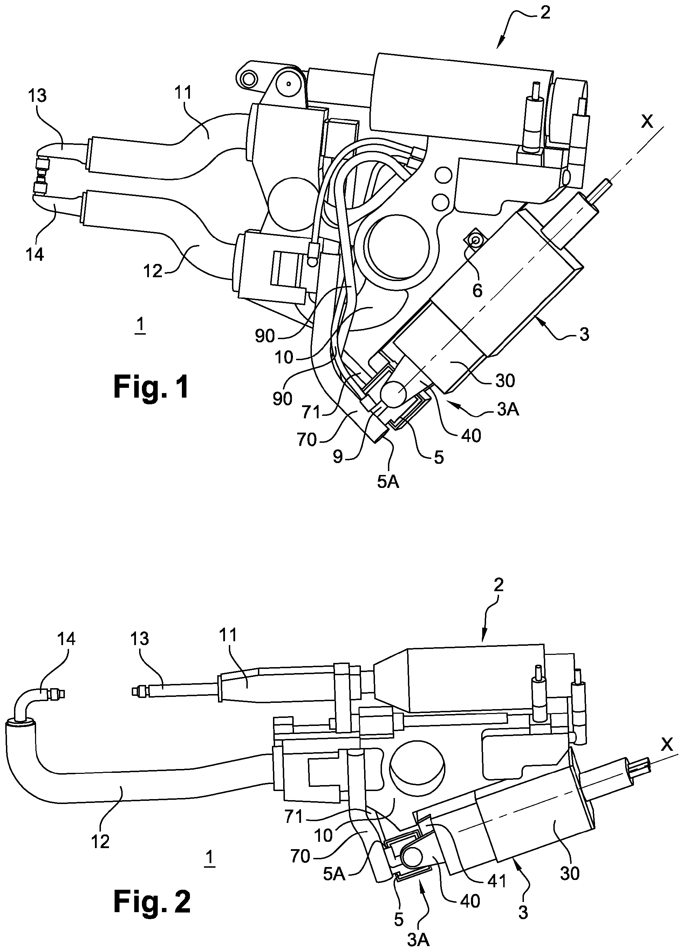

La pince à souder 1 de l'invention illustrée sur les figures 1 et 2 comporte de manière connue un corps 10, deux bras 11 et 12 écartés l'un de l'autre, deux électrodes de soudage 13 et 14 solidaires respectivement des extrémités libres des bras 11 et 12, un moteur électrique 2 monté dans la partie supérieure du corps de pince 10 apte à assurer la mobilité d'au moins un bras pour rapprocher les électrodes en vue du soudage, et un transformateur 3 relié électriquement aux électrodes pour les alimenter en un très fort courant électrique.

Les figures 1 et 2 sont identiques sur la nature des éléments constitutifs et du transformateur, seule diffère la forme des bras des électrodes et les électrodes.

L'invention se rapporte au montage du transformateur 3 sur le corps de pince 10 et à sa connexion électrique aux électrodes.

Selon l'invention, le transformateur 3 de forme longitudinale d'axe X est monté de manière oblique sur le corps de pince 10 par rapport à la verticale ou l'horizontale. Sa fixation mécanique avec le corps de pince et sa connexion électrique avec les électrodes sont combinées en son extrémité distale inférieure 3A.

En regard des figures 1 à 3, le transformateur 3 comporte un carter de protection 30, et selon l'invention des moyens externes 4, telles que deux pattes écartées 40 et 41, formant conjointement des moyens de fixation mécanique du transformateur sur le corps de pince et de connexion électrique du transformateur aux électrodes.

Les pattes 40 et 41 coopèrent mécaniquement avec le corps de pince 10. Plus précisément, le corps de pince 10 comporte une embase de fixation 5 (figures 1 et 2, et figures 4 et 5) qui accueille par engagement mutuel mécanique les pattes 40 et 41. La liaison mécanique, et le maintien des pattes dans l'embase 5, sont obtenus sans aucun moyen de fixation rapporté du type vis.

Selon l'invention, le transformateur 3 est monté sur le corps de pince ou démonté de ce dernier par un mouvement de translation pour l'engagement/le désengagement des pattes 40 et 41 dans l'embase 5 et est verrouillé/déverrouillé du corps de pince par un mouvement de rotation.

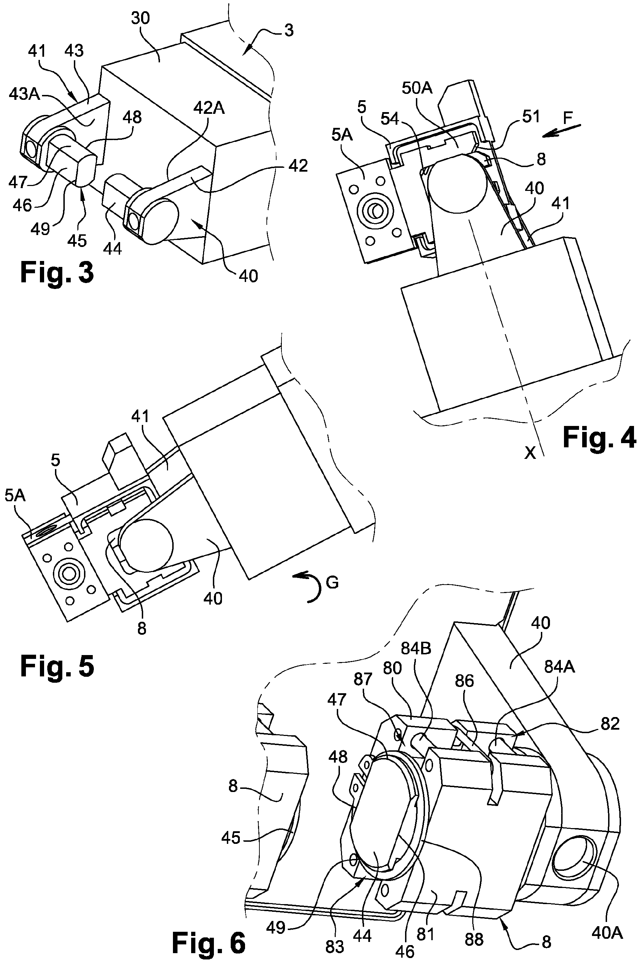

La figure 4 illustre la position déverrouillée du transformateur qui a été monté sur l'embase 5 par un mouvement de translation selon la flèche F transversalement à l'axe longitudinal X du transformateur.

La figure 5 illustre la position verrouillée du transformateur après avoir subi une rotation d'un quart de tour selon la flèche G à partir de la position de la figure 4.

Afin que le transformateur ne soit pas déverrouillé inopinément et pour garantir sa solidarisation au corps de pince, seule une vis de fixation 6 (figure 1) est éventuellement rapportée en partie médiane ou supérieure (à l'opposé des pattes 40 et 41) du carter 3 et coopère avec le corps de pince 10.

Au regard du raccordement électrique du transformateur aux électrodes 13 et 14, l'embase 5 faite d'un matériau électriquement conducteur (tel que du cuivre) comporte une zone de prolongement 5A (figures 4 et 5) à l'opposé du transformateur, cette zone de prolongement étant connectée électriquement tel que visible sur les figures 1 et 2 aux bras en cuivre 11 et 12 des électrodes 13 et 14 grâce à des barreaux de liaison en cuivre 70 et 71.

Le passage du courant depuis le transformateur 3 jusqu'à l'embase 5 est réalisée selon l'invention par la coopération mécanique des pattes 40 et 41 avec l'embase 5, les pattes comme l'embase présentant des surfaces conductrices de l'électricité. Les pattes et l'embase sont de préférence en cuivre. Il n'y a besoin d'aucun fils de raccordement électrique.

Avantageusement, le transformateur 3 comporte selon l'invention deux pièces d'interface, dont une seule 8 est visible en détail sur la figure 6, pour réaliser la coopération des pattes 40 et respectivement 41 du transformateur avec l'embase 5 du corps de pince.

Chaque pièce d'interface 8 assure d'une part le verrouillage et déverrouillage mécanique et garantit d'autre part le passage du courant en position verrouillée par la coopération les unes contre les autres de surfaces de contact conductrices de l'électricité entre les pattes du transformateur, lesdites pièces d'interface et l'embase du corps de pince.

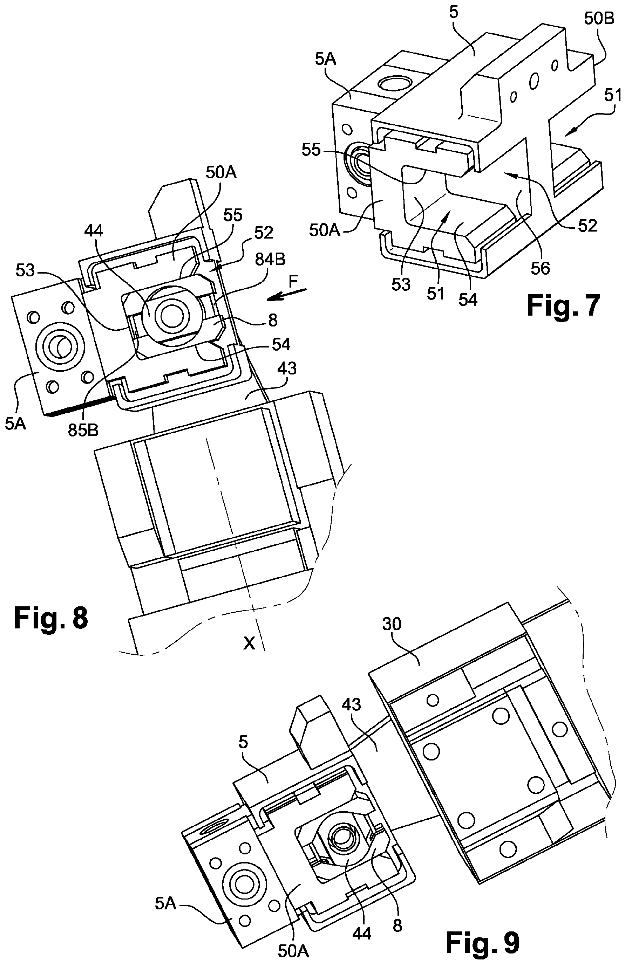

En regard de la figure 7, l'embase 5 du corps de pince 10 comporte sur deux faces externes opposées 50A et 50B, un logement respectif 51, pour accueillir une pièce d'interface 8 du transformateur.

Chaque logement 51 constitue une cavité borgne de forme parallélépipédique possédant dans le plan coplanaire à la face associée de l'embase, ici la face visible 50A, une section en forme de U.

Ainsi, le logement 51 est ouvert dans le plan de la face 50A et sur une face transversale 52, celle située en partie supérieure de l'embase 5 pour permettre l'engagement en translation d'une patte du transformateur. Il comporte un fond 53 et trois parois, dont deux parallèles opposés 54 et 55, dites par la suite parois de contact, et une transversale de fond 56, dite paroi de butée.

En position montée du transformateur et déverrouillée telle qu'illustrée sur les figures 4, 8 et 12, chaque pièce 8 solidaire de l'une des pattes, ici la patte visible 40 du transformateur, et plus spécifiquement d'un doigt 44 tel que décrit ultérieurement, est logée dans chaque logement 51 selon un jeu latéral J au regard de chaque paroi de contact 54 et 55 de l'ordre de 0,1 à 0, 3 mm.

Le jeu latéral permet l'engagement du transformateur et est destiné à être comblé, comme il sera vu plus loin, après pivotement du transformateur pour bloquer la pièce 8 dans le logement 51, assurant le verrouillage et permettre un contact de surface pour la connexion électrique.

La figure 3 est une vue de détail des pattes 40 et 41.

Chaque patte 40, 41 comporte une âme 42, respectivement 43, s'étendant longitudinalement au corps du carter 30, les âmes 42 et 43 étant disposées symétriquement en regard.

Chaque patte 40, 41 comporte un doigt 44, respectivement 45, transversalement en saillie de la face interne 42A, 43A de chaque âme 42, 43, les doigts étant dirigés l'un vers l'autre tout en étant espacés. Leur écartement correspond à la largeur séparant les deux logements 51 de l'embase de fixation 5.

En regard de la figure 6, chaque pièce d'interface 8 est creuse et rendue solidaire de chaque doigt 44, 45 par emmanchement serré.

La pièce d'interface 8 est conçue pour s'agrandir, s'écarter dans deux directions opposées. Sa description détaillée sera vue plus loin.

Le transformateur est destiné à être monté sur le corps de pince par la coopération de chaque patte 40, 41 qui est associée à une pièce d'interface 8 dans chaque logement 51 de l'embase de fixation 5.

En regard des figures 4 et 8, le montage du transformateur est obtenu selon un mouvement de translation dans le sens de la flèche F de sorte à positionner les âmes 42 et 43 des pattes 40 et 41 parallèlement aux faces respectives 50A, 50B de l'embase, que l'axe longitudinal X du carter soit perpendiculaire aux parois de contact 54 et 55, que l'engagement des doigts 44 et 45 associé chacun à une pièce d'interface 8 se fasse en regard de la face 52 de chaque logement 51 de l'embase et contre les fonds 56 des logements 51, et que cet engagement se poursuive jusqu'à ce que les pièces d'interface 8 viennent appuyer contre les parois de butée 53 des U des logements 51.

Le transformateur est destiné à subir un mouvement de rotation pour assurer son verrouillage dans l'embase de fixation 5 tel qu'illustré sur les figures 5 et 9. Une rotation en sens inverse sera effectuée pour son déverrouillage de l'embase en revenant à la position des figures 4 et 8.

Tandis que chaque pièce d'interface 8 est maintenue fixe dans chaque logement 51 de l'embase 5 selon deux jeux latéraux avec les parois de contact 54 et 55, le pivotement du transformateur implique la rotation de chaque doigt 44, 45 dans chaque pièce d'interface 8, ce qui engendre l'écartement de la pièce 8 et son placage en force contre les parois de contact 54 et 55.

A titre d'exemple, en regard de la figure 6, chaque pièce 8 se présente sous la forme d'un bloc sensiblement parallélépipédique creux comportant deux parties identiques et symétriques 80 et 81 reliées et mobiles l'une par rapport à l'autre au niveau de deux côtés opposés 82 et 83 via respectivement deux paires opposées d'axes parallèles dont seuls sont visibles 84A, 84B du côté 82. Les deux parties sont aptes à être translatées l'une par rapport à l'autre le long des axes 84A à 85B, 85B étant visible sur la figure 8.

La présence de deux axes par côté garantit une parfaite translation des deux parties 80 et 81 selon toute la profondeur ou hauteur de la pièce, c'est-à-dire selon la dimension transversale aux axes et correspondant à la longueur d'un doigt 44, 45, et à la dimension s'étendant du fond 56 du logement 51 à la face 50A en position montée de la pièce 8 dans le logement 51.

Pour garantir la solidarisation des deux parties 80 et 81, la pièce 8 comporte dans sa partie médiane au niveau de chacun des côtés opposés 82 et 83 et à distance de deux paires d'axes, un élément élastique 86 associé aux deux parties.

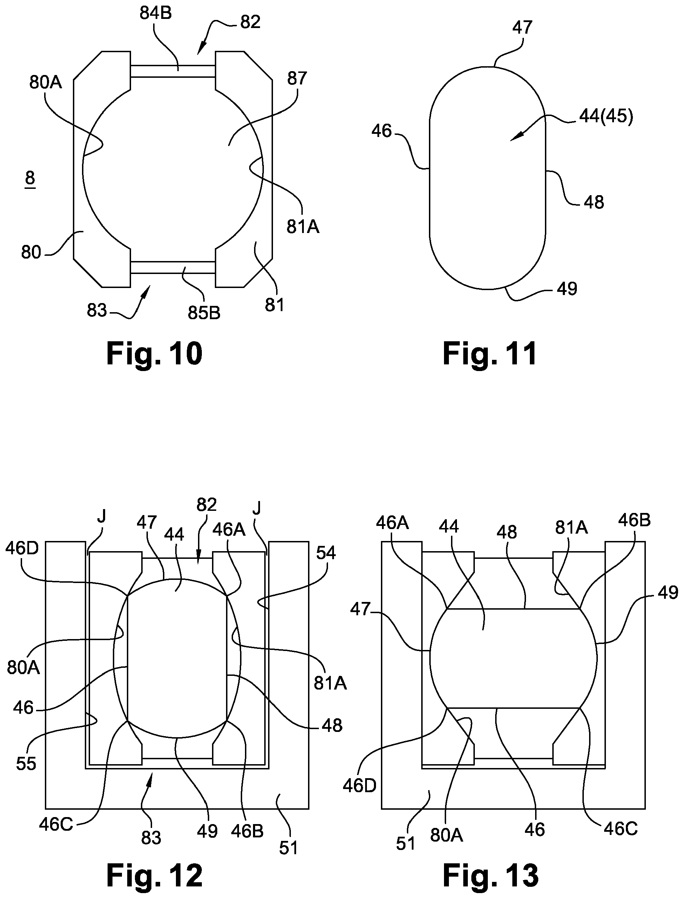

En regard des figures 6 et 10, les deux parties 80 et 81 d'une pièce 8 sont associées en regard pour ménager entre elles un orifice 87 dans lequel coopère un doigt 44 ou 45 de l'une des pattes du transformateur.

Chaque pièce 8 est emmanchée de manière serrée dans un des doigts et pour empêcher tout retrait intempestif, un collier 88 est positionné contre la pièce 8 et coopère avec le doigt, doté en son extrémité d'une gorge prévue pour recevoir ledit collier.

En regard de la figure 10, les faces intérieures 80A et 81A des parties 80 et 81 délimitant l'orifice 87 et transversales aux côtés reliés 82 et 83 possèdent un profil incurvé de concavité en regard.

Quant à chaque doigt 44, 45, il présente en regard des figures 3, 6 et 11, une forme dont la périphérie extérieure possède quatre côtés 46 à 49 deux à deux parallèles et symétriques, deux des côtés parallèles 46 et 48 étant rectilignes, tandis que les deux autres 47 et 49 sont bombés de manière opposée.

La longueur séparant les côtes convexes 47 et 49 du doigt est plus grande que la distance séparant les concavités 80A et 81A des parties 80 et 81 de la pièce 8. La différence de longueur est au moins égale à la somme des deux jeux latéraux entre la pièce 8 et le logement 5. Cette différence est par exemple de l'ordre de 0,6 mm.

Telle qu'illustrée sur la figure 12, chaque pièce 8 est montée initialement par emmanchement serré sur un doigt 40, 41 de sorte que les côtés rectilignes 46 et 48 du doigt sont en regard et à distance des faces concaves 80A et 81A de la pièce, tandis que les côtés convexes 47 et 49 sont en vis-à-vis et à distance des côtés 82 et 83 de la pièce. La pièce 8 est maintenue bloquée autour du doigt au niveau des quatre arêtes de jonction 46A à 46D reliant les quatre côtés du doigt, les arêtes étant en butée dans les concavités des faces 80A et 81A.

Cette position de la pièce 8 autour du doigt associé de la figure 12 correspond à l'état déverrouillé du transformateur 3 illustré en figure 8.

Le profil convexe des côtés 47 et 49 d'un doigt est le symétrique du profil concave des faces 80A et 81A d'une pièce 8. En position verrouillée (figures 9 et 13), chaque doigt 44, 45 a tourné d'un quart de tour dans chaque pièce 8, amenant les profils convexes 47 et 49 à coopérer avec les faces concaves 80A et 81A en épousant parfaitement leur surface.

Les pièces 8 et les doigts 44 et 45 étant dans un matériau conducteur de l'électricité, de préférence en cuivre, la coopération mutuelle surfacique des profils convexes 47 et 49 avec les faces concaves 80A et 81A assure une conductivité électrique de chaque doigt aux deux parties 80 et 81 de chaque pièce 8 selon deux surfaces continues opposée.

En outre, lors de la rotation du transformateur 3 et donc de chacun des doigts 44, 45 dans une pièce 8, les arêtes de jonction 46A à 46D d'un doigt restent en appui contre les parties 80 et 81, et du fait que la longueur séparant les profils convexes 47 et 49 du doigt est plus grande que la distance séparant les concavités 80A et 81A des parties 80 et 81 de la pièce 8, le pivotement engendre des forces de poussée exercées par les arêtes 46A à 46D contre lesdites parties 80 et 81, procurant l'écartement de ces dernières.

En écartant les parties 80 et 81 de chaque pièce 8 liée à chaque doigt 44 et 45 des pattes 40 et 41 du transformateur, lesdites parties 80 et 81 comblent les jeux latéraux des logements 51 de l'embase 5 de fixation, et viennent en butée et même en compression contre les parois de contact fixes 54 et 55 de chaque logement 50, bloquant chaque pièce 8 dans le logement 51 associé, ce qui verrouille le transformateur.

Ainsi, d'une part, le transformateur est verrouillé mécaniquement en position, et d'autre part la connexion électrique est directement obtenue par ce verrouillage mécanique, le courant électrique passant des pattes 40 et 41 et des doigts 44 et 45 aux pièces d'interface 8 et aux logements 51 via les surfaces en contact 47 et 49 et respectivement 80A et 81A.

Selon l'invention, il n'y a que deux mouvements cumulés à effectuer :
- une translation et une rotation d'un quart de tour pour engager les pattes 40 et 41 (plus particulièrement les doigts 44 et 45 associées aux pièces d'interface 8) du transformateur dans les logements 51 de l'embase de fixation du corps de pince, et verrouiller mécaniquement le transformateur et assurer la connexion électrique avec les électrodes, ou
- une rotation d'un quart de tour en sens inverse pour déverrouiller et remettre en position les doigts 44 et 45 afin de décoincer les pièces 8 des logements 51, et translater le transformateur pour sortir les doigts 44 et 45 associées aux pièces 8 hors des logements 51 de l'embase 5 du corps de pince.

La mise en oeuvre est par conséquent simple et rapide.

Au regard du refroidissement du transformateur, celui-ci comporte des moyens de refroidissement internes, passant notamment à l'intérieur de pattes, le liquide de refroidissement étant destiné à entrer par une pattes, suivre un chemin à l'intérieur du transformateur et ressortir par l'autre patte. En regard de la figure 6, l'extrémité distale des pattes, ici celle visible de la patte 40, comporte un orifice d'entrée/sortie 40A des moyens de refroidissement internes, qui est destiné à recevoir/être solidaire, en regard de la figure 1), de moyens de connexion à raccordement rapide 9 pour leur connexion à des conduites externes 90 d'acheminement du liquide de refroidissement.

## Revendications

1. Transformateur (3) pour pince à souder comportant un carter (30), des moyens de fixation mécanique et des moyens de connexion électrique, ainsi que deux pattes (40, 41) écartées l'une de l'autre et en regard, faisant saillie hors du carter, et formant à la fois, les moyens de fixation mécanique du transformateur destiné à être fixé sur la pince à souder, et les moyens de connexion électrique destinés à être reliés aux électrodes de la pince à souder, **caractérisé en ce que** les pattes (40, 41) comportent chacune un doigt (44, 45) et **en ce que** le transformateur comporte deux pièces d'interface (8) creuses pourvues chacune d'un orifice central (87), chacune des pièces étant emmanchée de manière serrée par son orifice central autour d'un doigt, le doigt ou la pièce restant libre de tourner l'un par rapport à l'autre lorsqu'une force de pivotement est exercée.

2. Transformateur selon la revendication précédente, **caractérisé en ce que** chaque pièce d'interface (8) est apte à modifier son volume selon au moins une dimension lorsqu'un mouvement de rotation est imposé à chaque doigt.

3. Transformateur selon l'une quelconque des revendications précédentes, **caractérisé en ce que** chaque pièce d'interface (8) comporte deux parties (80, 81) mobiles en translation l'une par rapport à l'autre et délimitant l'orifice central (87) dans lequel est logé un doigt.

4. Transformateur selon l'une quelconque des revendications précédentes **caractérisé en ce que** chaque partie (80, 81) d'une pièce d'interface présente une paroi interne concave (80A, 81A) en regard délimitant l'orifice (87) d'engagement d'un doigt et **en ce que** chaque doigt (44, 45) présente une section sensiblement rectangulaire, la longueur séparant les petits côtés (47, 49) de cette section étant plus grande que la distance séparant les parois internes concaves (80A, 81A) des parties de la pièce d'interface.

5. Transformateur selon la revendication précédente, **caractérisé en ce que** les petits côtés (47, 49) selon la section du doigt sont convexes, le profil de la convexité correspondant au profil de la concavité de chaque paroi interne des parties de la pièce d'interface, de sorte que les deux profils convexe et concave sont aptes à s'épouser parfaitement pour former des surfaces de contact continue.

6. Pince à souder (1) comportant un transformateur (3) selon l'une quelconque des revendications précédentes, **caractérisée en ce que** la pince comprend un corps (10), notamment une embase de fixation (5), et le transformateur comporte des moyens d'engagement mécanique mutuel coopérant avec le corps de pince pour réaliser concomitamment la fixation mécanique du transformateur sur le corps de la pince et le raccordement électrique du transformateur à la pince.

7. Pince à souder selon la revendication précédente, **caractérisée en ce qu'**elle comporte une embase de fixation (5) comportant deux logements (51) pour accueillir les pattes (40, 41) de fixation et de raccordement électrique du transformateur, la coopération des pattes avec les logements étant faite par un mouvement de translation, le verrouillage ou le déverrouillage mécanique des pattes dans les logements étant réalisé par un mouvement de rotation.

8. Pince à souder selon la revendication 6 ou 7, **caractérisée en ce que** chaque logement (51) accueille une pièce d'interface (8) associée avec un doigt (44, 45) en saillie du transformateur, chaque pièce présentant avec deux des parois (54, 55) de chaque logement un jeu latéral (J), le jeu étant comblé lors du verrouillage.

9. Pince à souder selon l'une des revendications 6 à 8, **caractérisée en ce qu'**elle comporte des conduites de refroidissement (90) qui sont reliées à des moyens de refroidissement internes du transformateur par des moyens de connexion à raccordement rapide (9), du type par encliquetage, de préférence agencés aux extrémités distales des pattes (40, 41) du transformateur.

## Patentansprüche

1. Transformator (3) für eine Schweißzange, ein Gehäuse (30), Mittel zur mechanischen Befestigung und Mittel zum elektrischen Anschluss, sowie zwei voneinander beabstandete und gegenüberliegende Laschen (40, 41) beinhaltend, die aus dem Gehäuse heraus vorstehen, und zugleich die Mittel zur mechanischen Befestigung des Transformators, der dazu bestimmt ist, an der Schweißzange befestigt zu werden, und die Mittel zum elektrischen Anschluss bilden, die dazu bestimmt sind, mit den Elektroden der Schweißzange verbunden zu werden, **dadurch gekennzeichnet, dass** die Laschen (40, 41) jeweils einen Finger (44, 45) beinhalten und dadurch, dass der Transformator zwei hohle Schnittstellenteile (8) beinhaltet, die jeweils mit einer zentralen Öffnung (87) versehen sind, wobei jedes der Teile fest durch seine zentrale Öffnung um einen Finger eingepasst wird, wobei sich der Finger oder das Teil weiter frei zueinander verdrehen können, wenn eine Schwenkkraft angewendet wird.

2. Transformator nach dem vorstehenden Anspruch, **dadurch gekennzeichnet, dass** jedes Schnittstellenteil (8) imstande ist, sein Volumen in mindestens einer Dimension zu ändern, wenn jedem Finger eine Drehbewegung auferlegt wird.

3. Transformator nach einem der vorstehenden Ansprüche, **dadurch gekennzeichnet, dass** jedes Schnittstellenteil (8) zwei Abschnitte (80, 81) beinhaltet, die zueinander verschiebbar sind und die zentrale Öffnung (87) eingrenzen, in der ein Finger aufgenommen ist.

4. Transformator nach einem der vorstehenden Ansprüche, **dadurch gekennzeichnet, dass** jeder Abschnitt (80, 81) eines Schnittstellenteils eine konkave, gegenüberliegende, Innenwand (80A, 81A) aufweist, die die Öffnung (87) zum Eingreifen eines Fingers eingrenzt, und dadurch, dass jeder Finger (44, 45) einen im Wesentlichen rechteckigen Querschnitt aufweist, wobei die Länge, die die kleinen Seiten (47, 49) dieses Querschnitts trennt, größer als der Abstand ist, der die konkaven Innenwände (80A, 81A) der Abschnitte des Schnittstellenteils trennt.

5. Transformator nach dem vorstehenden Anspruch, **dadurch gekennzeichnet, dass** die kleinen Seiten (47, 49) entlang des Querschnitts des Fingers konvex sind, wobei das Profil der Konvexität dem Profil der Konkavität jeder Innenwand der Abschnitte des Schnittstellenteils entspricht, sodass das konvexe und das konkave Profil imstande sind, sich perfekt aneinander anzuschmiegen, um ununterbrochene Kontaktoberflächen zu bilden.

6. Schweißzange (1), einen Transformator (3) nach einem der vorstehenden Ansprüche beinhaltend, **dadurch gekennzeichnet, dass** die Zange einen Korpus (10), insbesondere einen Befestigungssockel (5) umfasst, und der Transformator gegenseitige mechanische Eingriffsmittel beinhaltet, die mit dem Zangenkorpus zusammenwirken, um gleichzeitig die mechanische Befestigung des Transformators auf dem Korpus der Zange und den elektrischen Anschluss des Transformators an die Zange zu realisieren.

7. Schweißzange nach dem vorstehenden Anspruch, **dadurch gekennzeichnet, dass** sie einen Befestigungssockel (5) beinhaltet, der zwei Aufnahmen (51) beinhaltet, um die Laschen (40, 41) zum Befestigen und elektrischen Anbinden des Transformators unterzubringen, wobei das Zusammenwirken der Laschen mit den Aufnahmen durch eine Verschiebebewegung erfolgt, das mechanische Verriegeln oder Entriegeln der Laschen in den Aufnahmen durch eine Drehbewegung durchgeführt wird.

8. Schweißzange nach dem Anspruch 6 oder 7, **dadurch gekennzeichnet, dass** jede Aufnahme (51) ein Schnittstellenteil (8) unterbringt, das einem aus dem Transformator vorstehenden Finger (44, 45) zugeordnet ist, wobei jedes Teil mit zweien der Wände (54, 55) jeder Aufnahme ein seitliches Spiel (J) aufweist, wobei das Spiel beim Verriegeln ausgeglichen wird.

9. Schweißzange nach einem der Ansprüche 6 bis 8, **dadurch gekennzeichnet, dass** sie Kühlleitungen (90) beinhaltet, die durch Anschlussmittel mit Schnellanbindung (9) in der Art einer Klinke, die vorzugsweise an den distalen Enden der Laschen (40, 41) des Transformators angeordnet sind, mit internen Kühlmitteln des Transformators verbunden sind.

## Claims

1. Transformer (3) for soldering tweezers, comprising a case (30), mechanical-fastening means and electrical-connection means, as well as two lugs (40, 41) distant from and facing one another, protruding out of the case, and forming both, the mechanical-fastening means of the transformer intended to be fastened onto the soldering tweezers, and the electrical-connection means intended to be connected to the electrodes of the soldering tweezers, **characterised in that** the lugs (40, 41) each comprise a pin (44, 45) and **in that** the transformer comprises two hollow interface parts (8) each provided with a central orifice (87), each of the parts being snugly fitted by its central orifice around a pin, the pin or the part remaining free to rotate with respect to one another when a pivoting force is exerted.

2. Transformer according to the previous claim, **characterised in that** each interface part (8) is capable of modifying its volume in at least one dimension when a movement of rotation is imposed on each pin.

3. Transformer according to any one of the previous claims, **characterised in that** each interface part (8) comprises two portions (80, 81) mobile in translation with respect to one another and defining the central orifice (87) in which a pin is housed.

4. Transformer according to any one of the previous claims, **characterised in that** each portion (80, 81) of an interface part has a facing concave inner wall (80A, 81A) defining the orifice (87) for insertion of a pin and **in that** each pin (44, 45) has a substantially rectangular cross-section, the length separating the small sides (47, 49) of this cross-section being greater than the distance separating the concave inner walls (80A, 81A) of the portions of the interface part.

5. Transformer according to the previous claim, **characterised in that** the small sides (47, 49) according to the cross-section of the pin are convex, the profile of the convexity corresponding to the profile of the concavity of each inner wall of the portions of the interface part, in such a way that the two profiles, convex and concave, are capable of fitting together perfectly in order to form continuous contact surfaces.

6. Soldering tweezers (1) comprising a transformer (3) according to any one of the previous claims, **characterised in that** the tweezers comprise a body (10), in particular a fastening base (5), and the transformer comprises means for mutual mechanical engagement cooperating with the tweezer body in order to concomitantly carry out the mechanical fastening of the transformer onto the body of the tweezers and the electrical connection of the transformer to the tweezers.

7. Soldering tweezers according to the previous claim, **characterised in that** they comprise a fastening base (5) comprising two housings (51) for receiving the lugs (40, 41) for fastening and electrical connection of the transformer, the cooperation of the lugs with the housings being carried out by a movement of translation, the locking or the mechanical unlocking of the lugs in the housings being carried out by a movement of rotation.

8. Soldering tweezers according to claim 6 or 7, **characterised in that** each housing (51) receives an interface part (8) associated with a pin (44, 45) protruding from the transformer, each part having, with two of the walls (54, 55) of each housing, a lateral clearance (J), the clearance being filled during the locking.

9. Soldering tweezers according to one of claims 6 to 8, **characterised in that** they comprise cooling pipes (90) that are connected to internal cooling means of the transformer by quick-fitting connection means (9), of the type by snapping on, preferably arranged at the distal ends of the lugs (40, 41) of the transformer.
